Europäisches Patentamt

European Patent Office

Office européen des brevets

(11) Veröffentlichungsnummer: **0 385 282**
**A1**

## (12) EUROPÄISCHE PATENTANMELDUNG

(21) Anmeldenummer: **90103487.6**

(22) Anmeldetag: **23.02.90**

(51) Int. Cl.5: **A01B 33/12**

(30) Priorität: **03.03.89 DE 3906856**

(43) Veröffentlichungstag der Anmeldung:
**05.09.90 Patentblatt 90/36**

(84) Benannte Vertragsstaaten:
**DE FR GB IT NL**

(71) Anmelder: **Amazonen-Werke H. Dreyer GmbH
& Co. KG
Am Amazonenwerk 9-13
D-4507 Hasbergen-Gaste(DE)**

(72) Erfinder: **Gieseke, Reinhard
Eichenwall 4
D-2872 Hude 1(DE)**

(54) **Bodenbearbeitungsmaschine.**

(57) Bodenbearbeitungsmaschine, insbesondere Kreiselegge, mit in einer Reihen nebeneinander angeordneten, zwangsläufig angetrieben Werkzeugkreiseln und einer hinter ihnen angeordneten Nachlaufwalze sowie neben den Enden der Kreiselreihe in Arbeitsrichtung der Maschine stehend angeordneten Seitenschilden, wobei an den Seitenschilden im Bereich zwischen der Kreiselreihe und der Nachlaufwalze schräg zur Fahrtrichtung und schräg zur Maschinenmitte weisende Leitplatten an den Seitenblechen verstellbar angeordnet sind. Um eine über die gesamte Arbeitsbreite der Bodenbearbeitungsmaschine gleichbleibende Rückverfestigung durch die Nachlaufwalze zu erreichen, ist vorgesehen, daß die Leitplatte in Höhenrichtung gegenüber dem Seitenblech (9) einstellbar ist.

*FIG. 3*

EP 0 385 282 A1

Die Erfindung betrifft eine Bodenbearbeitungsmaschine gemäß Oberbegriff des Patentanspruches 1.

Eine derartige Bodenbearbeitungsmaschine ist bereits durch die DE-OS 34 18 976 bekannt. Diese Bodenbearbeitungsmaschine weist die an ihren seitlichen Enden parallel zur Fahrtrichtung stehenden Seitenbleche auf, die die Erde im Außenbereich der Arbeitsbreite der Maschine zurückhalten, wobei die schräg zur Maschinenmitte weisenden, an den Seitenplatten horizontal verstellbaren Leitplatten angeordnet sind. Diese schräg zur Fahrtrichtung und schräg zur Maschinenmitte weisenden Leitplatten sollen die von den äußeren Werkzeugkreiseln aufgerührte Erde in den Bereich der Nachlaufwalze leiten, damit die Nachlaufwalze den gesamten, von den Werkzeugkreiseln bearbeiteten Bodenstreifen einebnen kann, und sich keine seitlich der Nachlaufwalze erstreckenden Erddämme bilden. Die von den äußeren Werkzeugkreiseln jeweils in Richtung gegen das entsprechende Seitenblech, also in den Außenbereich der Bodenbearbeitungsmaschine, d.h. aus dem Wirkungsbereich der Nachlaufwalze hinaus transportierten Bodenteile werden mittels der jeweiligen Leitplatte in den Wirkungsbereich der Nachlaufwalze geleitet, so daß diese Bodenteile auch von der Nachlaufwalze angedrückt werden.

Je nach der Fließfähigkeit des zu bearbeitenden Bodens, d.h. je nach vorherrschender Bodenart, werden mehr oder weniger Bodenteile von den äußeren Werkzeugkreiseln in Richtung der Seitenbleche transportiert. Diese Bodenteile werden nun dem Wirkungsbereich der Nachlaufwalze mittels der schräg zur Maschinenmitte weisenden Leitplatten wieder zugeführt. Die Leitplatten wirken wie kleine Räumschilde, wobei ihre untere Begrenzungsfläche etwa auf gleicher Höhe verläuft, wie die untere Begrenzungsfläche der sich parallel zur Fahrtrichtung erstreckenden Seitenbleche. Hierdurch werden alle von den äußeren Werkzeugkreiseln in Richtung auf die Seitenbleche transportierten Bodenteile zur Maschinenmitte umgeleitet, wodurch es dann durch die umgelenkten Bodenteile zu Bodenanhäufungen kommen kann, wodurch sich ungleichmäßige Bodenrückverfestigungen über die Arbeitsbreite der Nachlaufwalze ergeben. Diese ungleichmäßige Rückverfestigung des Bodens wirkt sich sehr nachteilig auf eine optimale Saatbettbereitung aus.

Der Erfindung liegt nun die Aufgabe zugrunde, eine über die gesamte Arbeitsbreite der Bodenbearbeitungsmaschine gleichbleibende Rückverfestigung durch die Nachlaufwalze zu erreichen.

Diese Aufgabe wird in erfindungsgemäßer Weise dadurch gelöst, daß die Leitplatte in Höhenrichtung gegenüber dem Seitenblech einstellbar ist.

Infolge dieser Maßnahme läßt sich die Leitplatte in unterschiedlichen Höhen gegenüber dem Seitenblech einstellen, wobei der sich zwischen der unteren Begrenzungsfläche des Seitenbleches und der unteren Begrenzungsfläche der Leitplatte ergebene Schlitz, durch den Bodenteile abfließen können, veränderbar ist, so daß sich die von den Leitplatten ausgehende, in Maschinenmitte sich erstreckende Förderintensität der von den äußeren Werkzeugkreiseln in Richtung der Seitenbleche transportierten Bodenteile verändern läßt. Je nach Fließfähigkeit des zu bearbeitenden Bodens läßt sich also die von den Leitplatten ausgehende Förderwirkung der Bodenteile zur Maschinenmitte hin einstellen, so daß es nicht mehr zu den unerwünschten Bodenanhäufungen im äußeren Arbeitsbereich der Nachlaufwalze noch durch das Umleiten der Bodenteile mittels der Leitplatten kommt, und sich somit eine über die gesamte Arbeitsbreite der Nachlaufwalze erstreckende gleichmäßige Rückverfestigung des Ackerbodens ergibt. Diese gleichmäßige, sich über den gesamten Acker erstreckende gleichmäßige Rückverfestigung des bearbeiteten Bodens ist Grundvoraussetzung für ein optimales Saatbett.

Zur höhenbeweglichen Anordnung der jeweiligen Leitplatte an dem jeweiligen Seitenblech ist erfindungsgemäß vorgesehen, daß in dem Seitenblech und/oder der Leitplatte vertikale Langlöcher vorgesehen sind, welche von Schrauben durchgriffen werden. Hierdurch läßt sich die jeweilige Leitplatte auf einfachste Weise in Höhenrichtung stufenlos verstellen.

In einer anderen Ausführungsform ist erfindungsgemäß vorgesehen, daß in dem Seitenblech und/oder der Leitplatte mehrere in Höhenrichtung hintereinander angeordnete Löcher angeordnet sind, welche von Schrauben durchgriffen werden.

Zur gleichmäßigen Zuführung der durch die jeweiligen äußeren Werkzeugkreisel nach außen in Richtung auf die Seitenbleche transportierten Bodenteile in den Arbeitsbereich der Nachlaufwalze ist weiterhin erfindungsgemäß vorgesehen, daß die jeweilige Leitplatte in Längsrichtung gegenüber dem Seitenblech verstellbar ist. Durch die Verstellung der Leitplatten in Längsrichtung gegenüber dem Seitenblech läßt sich die Strömungsrichtung der der Nachlaufwalze zugeführten Bodenteile ebenfalls günstig beeinflussen, weil sich so ein gewünschter Rückfluß der in Richtung der Maschinenmitte umgeleiteten Bodenteile entsprechend ihrer jeweiligen Fließfähigkeit aus dem Bereich der Leitplatten in Richtung auf den äußersten Arbeitsbereich der Nachlaufwalze ergibt, ohne daß es zu einer Erzeugung der seitlichen, unerwünschten Erddämme kommt. Auch diese Verstellung der Leitplatten in Längsrichtung dient zur Erzeugung eines gleichmäßig rückverfestigten Saatbettes, da die Menge der von den Leitplatten umgeleiteten Bodenteile einstellbar ist und so nicht zu Bodenanhäufungen durch die umgeleiteten Bodenteile im Arbeitsbereich der Nachlaufwalze kommt.

In der Ausführungsform ist erfindungsgemäß vorgesehen, daß die Leitplatte jeweils auf der Innenseite der Seitenbleche angeordnet ist.

Bei der Ausbildung der Leitplatten ist erfindungsgemäß vorgesehen, daß die Leitplatten jeweils ein in Fahrtrichtung nach vorn oder hinten weisendes Halteteil aufweisen, wobei die Anschraubstelle sich in einem Abstand zu dem schräg nach innen weisenden Teil der Leitplatte befindet. Hierdurch ergibt sich eine gewisse federnde nachgiebige Anordnung der Leitplatten an den Seitenblechen, so daß keine Gegenstände zwischen den Leitplatten und der Nachlaufwalze einklemmen können.

Weitere Einzelheiten der Erfindung sind der Beispielsbeschreibung und den Zeichnungen zu entnehmen. Hierbei zeigt

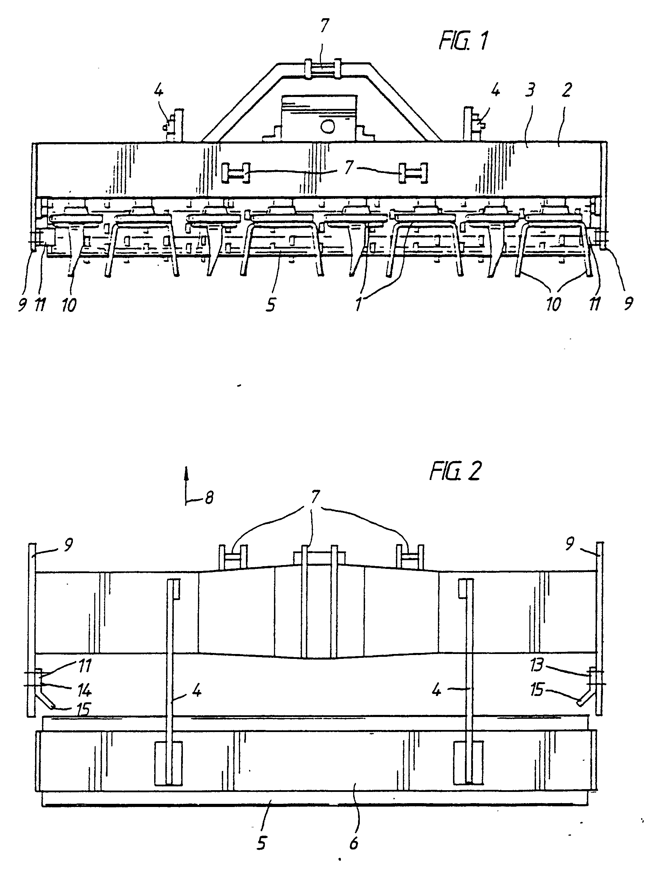

Fig. 1 die in erfindungsgemäßer Weise aus-gerüstet, als Kreiselegge ausgebildete Bodenbear-beitungsmaschine in der Ansicht von vorne,

Fig. 2 die Bodenbearbeitungsmaschine gemäß Fig. 1 in der Draufsicht und in Prinzipdarstellung und

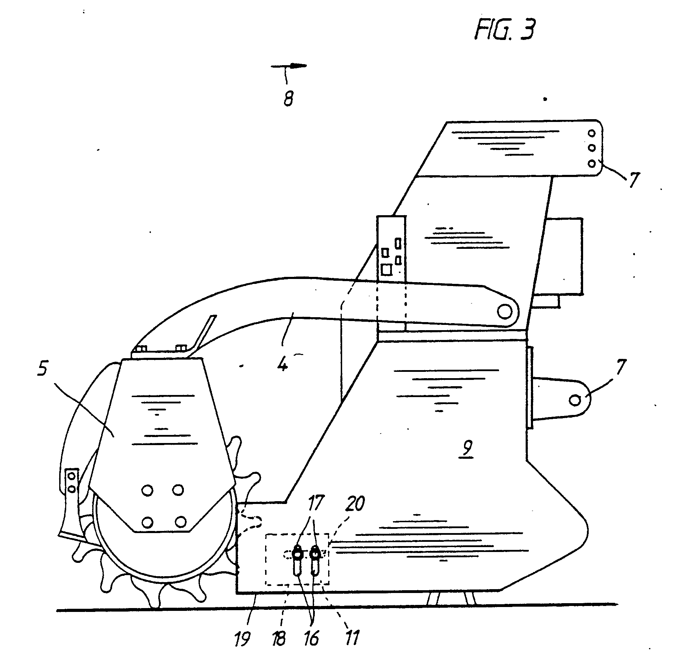

Fig. 3 die in erfindungsgemäßer Weise aus-gerüstete Bodenbearbeitungsmaschine in der Sei-tenansicht und in vergrößertem Maßstab.

Die Bodenbearbeitungsmaschine ist als Kreiselegge ausgebildet und weist die in einer Reihe nebeneinander angeordneten, zwangsläufig angetriebenen Werkzeugkreisel 1, den als Getriebegehäuse 2 ausgebildeten Kastenbalken 3 und die mittels der Haltearme 4 am Kastenbalken 3 angeordnete Nachlaufwalze 5 auf. Die Nachlaufwalze 5 ist drehbar in dem Tragrahmen 6 gelagert. Mittels der Dreipunktkupplungselemente 7 läßt sich diese Bodenbearbeitungsmaschine an den Dreipunkt-krafteber eines Ackerschleppers anschließen. An dem Kastenbalken 3 ist jeweils neben dem Ende der Kreiselreihe in Fahrtrichtung 8 der Maschine das in unterschiedlichen Höhen einstellbare Seitenblech 9 befestigt. Dieses Seitenblech 9 erstreckt sich parallel zur Fahrtrichtung 8 und wirkt jeweils mit den Werkzeugen 10 der äußeren Werkzeugkreisel 1 zusammen. Die stehend angeordneten Seitenbleche sollen also verhindern, daß Erde aus dem Arbeitsbereich der Arbeitsbreite der Bodenbearbeitungsmaschine hinausströmen kann. Damit nun die von den äußeren Werkzeugen der Werkzeugkreisel 1 in Richtung auf die Seitenbleche 9 transportierten Bodenteile nicht aus dem Arbeitsbereich der Nachlaufwalze nach außen strömen können und so die unerwünschten seitlichen Erddämme entstehen, ist jeweils die in Höhenrichtung einstellbare Leitplatte 11 an dem jeweiligen Seitenblech 9 befestigt. Diese Leitplatte 11 befindet sich jeweils auf der Innenseite 12 der Seitenbleche 9 und weist den in Fahrtrichtung 8 nach vorn aufweisenden Halteteil 13 auf, wobei die Anschraubstelle 14 sich in einem Abstand zu dem schräg nach innen weisenden Teil 15 der Leitplatte 11 befindet. Die Leitplatte 11 ist in Höhenrichtung einstellbar in den vertikalen Langlöchern 16 der Seitenfläche 9 mittels der Schrauben 17 befestigt.

Mittels der jeweiligen, in Höhenrichtung gegenüber dem Seitenblech 9 einstellbaren Leitplatte 11 läßt sich nun der Abstand der unteren Begrenzungsfläche 18 gegenüber der unteren Begrenzungsfläche 19 des Seitenbleches 9 einstellen, so daß je nach der Fließfähigkeit des bearbeiteten Bodens während des Arbeitsvorganges auch Bodenteile unter der unteren Begrenzungsfläche 18 der Leitplatte 11 hindurchfließen können, so daß nicht die gesamte, von den Werkzeugkreiseln in den Bereich der Seitenplatten 9 geförderten Bodenteile mittes des schräg zur Maschinenmitte nach innen weisenden Teiles 15 der Leitplatte 11 in Richtung Maschinenmitte gefördert wird, sondern nur ein Teil der Bodenteile. Hierdurch werden dann nur die aus dem in Richtung zur Maschinenmitte stammenden Bodenteile des Arbeitsbereiches der Werkzeuge 10 der äußeren Werkzeugkreisel 1 nach innen umgeleitet, so daß es zu keinen Bodenanhäufungen durch die von den Leitplatten 11 umgeleiteten Bodenteile kommt, und sich so eine gleichmäßige Bodenverdichtung über die gesamte Arbeitsbreite der Bodenbearbeitungsmaschine ergibt. Die vorab geschilderten Vorteile lassen sich auch durch Verstellung der Leitplatten 11 in Längsrichtung. gegenüber dem Seitenblech erreichen, wozu die Leitplatten 11 die Langlöcher 20 aufweisen.

## Ansprüche

1. Bodenbearbeitungsmaschine, insbesondere Kreiselegge, mit in einer Reihe nebeneinander an-geordneten, zwangsläufig angetriebenen Werk-zeugkreiseln und einer hinter ihnen angeordneten Nachlaufwalze, sowie neben den Enden der Kreiselreihe in Arbeitsrichtung der Maschine stehend angeordneten Seitenschilden, wobei an den Seitenschilden im Bereich zwischen der Kreiselreihe und der Nachlaufwalze schräg zur Fahrtrichtung und schräg zur Maschinenmitte weisende Leitplatten an den Seitenblechen verstellbar angeordnet sind, dadurch gekennzeichnet, daß die Leitplatte (11) in Höhenrichtung gegenüber dem Seitenblech (9) einstellbar ist.

2. Bodenbearbeitungsmaschine nach Anspruch 1, dadurch gekennzeichnet, daß in dem Seitenblech (9) und/oder der Leitplatte (11) vertikale Langlöcher (16) vorgesehen sind, welche von Schrauben (17) durchgriffen werden.

3. Bodenbearbeitungsmaschine nach Patentanspruch 1, dadurch gekennzeichnet, daß in dem Seitenblech (9) und/oder der Leitplatte (11) mehrere in Höhenrichtung hintereinander angeordnete Löcher angeordnet sind, welche von Schrauben (17) durchgriffen werden.

4. Bodenbearbeitungsmaschine nach einem oder mehreren der vorstehenden Ansprüche, dadurch gekennzeichnet, daß die Leitplatten (11) in Längsrichtung gegenüber dem Seitenblech (9) verstellbar ist.

5. Bodenbearbeitungsmaschine nach einem oder mehreren der vorstehenden Ansprüche, dadurch gekennzeichnet, daß die Leitplatte (11) jeweils auf der Innenseite (12) der Seitenbleche (9) angeordnet ist.

6. Bodenbearbeitungsmaschine nach einem oder mehreren der vorstehenden Ansprüche, dadurch gekennzeichnet, daß die Leitplatten (9) jeweils ein in Fahrtrichtung (8) nach vorn oder hinten weisendes Halteteil (13) aufweisen, wobei die Anschraubstelle (14) sich in einem Abstand zu dem schräg nach innen weisenden Teil (15) der Leitplatte (11) befindet.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2564687 (RABEWERK HEINRICH CLAUSING) <br> * Seite 6, Zeilen 1 - 21; Figur 3 * <br> * Seite 7, Zeilen 5 - 11 * | 1-6 | A01B33/12 |
| D | & DE-A-3418976 | | |
| | --- | | |
| Y | FR-A-2416634 (CRETE-GUERIN,A.) <br> * Seite 3, Zeilen 2 - 34; Figur 4 * | 1-6. | |
| | --- | | |
| Y | GB-A-2092874 (VAN DER LELY) <br> * Seite 5, Zeilen 34 - 53; Figuren 5, 6 * | 1-6. | |
| | --- | | |
| Y | DE-U-8515547 (AMAZONEN WERKE) <br> * Seite 7, Zeilen 2 - 7; Figur 3 * | 1-6. | |
| | ----- | | |
| | | | **RECHERCHIERTE SACHGEBIETE (Int. Cl.5)** |
| | | | A01B |

Der vorliegende Recherchenbericht wurde für alle Patentansprüche erstellt

| Recherchenort | Abschlußdatum der Recherche | Prüfer |
|---|---|---|
| DEN HAAG | 15 JUNI 1990 | WOHLRAPP R.G. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
.........................................................................................
& : Mitglied der gleichen Patentfamilie, übereinstimmendes
   Dokument

EPO FORM 1503 03.82 (P0403)